# FASCICULE DE BREVET EUROPEEN

(11) **EP 1 640 417 B1**
(45) Date de publication et mention de la délivrance du brevet: **06.06.2007**
(21) Numéro de dépôt: 05300695.3
(22) Date de dépôt: 25.08.2005
(51) Int. Cl.: C08L 83/05, C08L 83/07, H02G 15/103, C08L 9/00

(54) **Composition d'élastomere de silicone liquide pour fabriquer un matériau à haute résistance au déchirement**
Flüssige Silikonelastomerzusammensetzung zur Herstellung eines Materials mit hoher Reissfestigkeit
Liquid silicon elastomer composition for preparing a material with high tear strength

(30) Priorité: 30.08.2004 FR 0451931
(43) Date de publication de la demande: 29.03.2006
(73) Titulaire: Nexans, 75008 Paris (FR)
(72) Inventeur: Bayon, Lorrene, 69008, Lyon (FR); Koelblin, Christian, 01800, Meximieux (FR)
(74) Mandataire: Feray, Valérie

(56) Documents cités:
- EP-A- 1 074 576
- US-A- 4 701 503
- US-A- 5 656 690
- US-A1- 2003 045 615
- ANONYMOUS: "Ricon R 153 (Polybutadiene)" INTERNET ARTICLE, [Online] XP002361012 Extrait de l'Internet: URL:http://www.sartomer.com/wpapers/2652.p df> [extrait le 2005-12-27]
- ANONYMOUS: "Ricon Resins High Perfomance Polymer Additives (Homopolymers of Butadiene)" INTERNET ARTICLE, [Online] XP002361013 Extrait de l'Internet: URL:http://www.sartomer.com/wpapers/3156.p df> [extrait le 2005-12-27]

## Description

La présente invention concerne une composition réticulable à base d'élastomère de silicone liquide, qui est destinée à la fabrication d'un matériau à haute résistance au déchirement.

L'invention trouve une application particulièrement avantageuse, mais non exclusive, dans le domaine des accessoires d'énergie, tels que des éléments de terminaison ou des éléments de jonction pour câbles d'énergie.

Les élastomères de silicone liquide, communément désignés par l'anglicisme Liquid Silicon Rubber ou LSR, sont des mélanges essentiellement composés d'un polyorganosiloxane comportant au moins deux insaturations, d'un hydrogénopolyorganosiloxane comportant au moins deux liaisons silicium-hydrogène, et d'un catalyseur d'hydrosilylation. Il est à noter que ce type de compositions contient en outre généralement de la silice afin de donner une certaine cohésion au matériau final, étant entendu que les silicones réticulés présentent intrinsèquement une consistance plutôt pâteuse, voire huileuse, à l'état normal non réticulé.

Quoi qu'il en soit, les élastomères de silicone sont connus pour offrir d'excellentes résistances à la chaleur et aux intempéries, ainsi que de bonnes propriétés isolantes. Mais ce type de matériaux présente aussi l'inconvénient de ne disposer que d'une faible résistance au déchirement, notamment comparé aux caoutchoucs naturels et synthétiques qui sont eux principalement constitués d'un squelette carboné. Dans la pratique, cette dernière caractéristique pose un véritable problème dès lors que les élastomères de silicone sont destinés à être utilisés pour constituer des éléments susceptibles d'être manipulés. Ce qui est précisément le cas pour des applications de type accessoires d'énergie.

Différentes solutions techniques existent cependant pour accroître la résistance au déchirement des matériaux à base d'élastomères de silicone liquide.

La première consiste à utiliser des charges de silice en quantités importantes. Mais en raison des propriétés épaississantes de ce type de composés, il se produit souvent une augmentation indésirable de la viscosité de la composition, qui peut même conduire à un durcissement du matériau. L'élastomère de silicone liquide peut ainsi devenir incompatible avec un procédé d'injection à basse pression, qui est une technique employée pour mettre en oeuvre ce type de matériau. Augmenter la teneur en silice au sein de la composition d'élastomère de silicone liquide a également pour conséquence de dégrader certaines propriétés électriques du matériau réticulé, notamment la résistance à l'arc et la résistance au cheminement.

La résistance au déchirement des élastomères de silicone peut également être augmentée en utilisant de longues chaînes de polysiloxane, puisque ces dernières sont à même d'offrir une plus grande fonctionnalité de part justement leurs dimensions supérieures et donc une densité de réticulation plus importante. Mais comme dans le cas de la première solution, on aboutit rapidement à une augmentation significative de la viscosité, voire même de la dureté du matériau réticulé.

Une troisième solution connue permet de s'affranchir de l'ensemble de ces inconvénients récurrents. Elle consiste à compléter la composition d'élastomère de silicone liquide avec un polymère tel qu'un polyamide, un polyéthylène ou un EPDM, en association avec un ou plusieurs agents de couplage. Bien qu'elle permette effectivement d'accroître la résistance au déchirement du matériau, ce type de solution présente toutefois l'inconvénient d'être comparativement beaucoup plus coûteuse que ses homologues de l'état de la technique. Ceci en raison aussi bien du prix de revient intrinsèque de chaque agent de couplage utilisé, que du coût lié à la complexification du procédé de fabrication que de tels ajouts engendrent.

Aussi le problème technique à résoudre, par l'objet de la présente invention, est de proposer une composition d'élastomère de silicone liquide comportant un polyorganosiloxane insaturé pourvu d'au moins deux insaturations, un hydrogénopolyorganosiloxane doté d'au moins deux liaisons silicium-hydrogène, un catalyseur d'hydrosilylation et de la silice, composition qui permettrait d'éviter les problèmes de l'état de la technique en offrant une résistance au déchirement sensiblement améliorée, tout en bénéficiant d'une parfaite compatibilité avec les procédés d'injection moulage de l'état de la technique, de propriétés électriques préservées, ainsi que d'un prix de revient contenu.

La solution au problème technique posé consiste, selon la présente invention, en ce que la composition d'élastomère de silicone liquide comporte en outre un polymère organique insaturé pourvu d'au moins deux insaturations, ainsi qu'un agent réticulant spécifique dudit polymère organique insaturé.

Il résulte de ce qui vient d'être dit précédemment, qu'une composition conforme à l'invention se doit de contenir au moins un polyorganosiloxane insaturé tel que précédemment défini, au moins un hydrogénopolyorganosiloxane, au moins un catalyseur d'hydrosilylation, au moins un type de silice, au moins un polymère organique insaturé pourvu d'au moins deux insaturations, et au moins un agent réticulant spécifique dudit polymère organique insaturé. Mais cela signifie aussi implicitement que la composition peut comporter plusieurs polyorganosiloxanes insaturés et/ou plusieurs hydrogénopolyorganosiloxanes et/ou plusieurs catalyseurs d'hydrosilylation et/ou plusieurs types différents de silice et/ou plusieurs polymères organiques insaturés et/ou plusieurs agents réticulants spécifiques.

Il est à noter que dans l'ensemble de ce texte, la locution "polymère organique" désigne toute macromolécule hydrocarbonée dont le squelette principal est essentiellement composé d'atomes de carbone. Cela sous-entend implicitement que les polymères dotés de chaînes principales à base d'autres atomes que le carbone, c'est-à-dire les polymères inorganiques, ne sont donc pas concernés. C'est notamment le cas des polyorganosiloxanes qui sont des polymères bâtis à partir d'enchaînements d'atomes de silicium et d'oxygène en guise de squelette principal.

On peut préciser que chaque insaturation, dont est pourvue le polyorganosiloxane insaturé et le polymère organique insaturé, peut être indifféremment constituée par une double ou une triple liaison. Chacune de ces liaisons insaturées peut par ailleurs être indifféremment de type carbone-carbone, carbone-oxygène, carbone-azote, azote-azote, azote-oxygène. Chaque insaturation peut en outre être indifféremment, soit de type pendante le long de la chaîne ou en position terminale, soit directement intégrée en milieu de chaîne.

L'invention telle qu'ainsi définie présente quoi qu'il en soit l'avantage de pouvoir augmenter la résistance au déchirement d'un matériau silicone, simplement en ajoutant un polymère organique insaturé et un agent réticulant spécifique à la composition de base. Contrairement à l'art antérieur, le fait d'utiliser ce type spécifique de polymère permet de se dispenser de l'ajout d'un quelconque agent de couplage. Le polymère organique insaturé doit être considéré comme un polymère de renforcement.

L'amélioration de la résistance au déchirement provient ici de l'hétérogénéité structurelle du matériau issu de la réticulation d'une composition conforme à l'invention. La tenue au déchirement d'un matériau est en effet liée à sa capacité à résister à la propagation d'une fissure. C'est ainsi que la résistance au déchirement peut être améliorée par tous facteurs permettant de dissiper de l'énergie. L'ajout de charges au sein du matériau silicone est un des moyens utilisé pour dissiper de l'énergie.

Concrètement dans le cas de l'invention, la dispersion dans une matrice silicone, d'un polymère organique insaturé associé à un agent réticulant spécifique, permet de créer des inhomogénéités sous forme de nodules. Une fois réticulés, ces nodules jouent le rôle de charges de renforcement dans la matrice. Deux phénomènes principaux, liés à la présence de ce type de charges, contribuent au renforcement du matériau. Il s'agit d'une part du phénomène d'émoussement de la pointe de la fissure, ce qui revient à diminuer la densité d'énergie. Et il s'agit d'autre part du phénomène de déviation de la fissure, les charges agissant comme des barrières à même de modifier la direction de propagation de ladite fissure, ce qui engendre avantageusement une diminution de l'énergie de propagation.

La présence de l'agent réticulant spécifique permet de garantir la réticulation du polymère de renforcement au sein de la matrice silicone, quelle que soit l'interactivité entre ledit polymère et l'hydrogénopolyorganosiloxane, c'est-à-dire l'agent réticulant du polyorganosiloxane insaturé. Bien entendu, la notion d'agent réticulant s'entend au sens large du terme, c'est-à-dire qu'elle désigne notamment tout initiateur de réticulation connu comme par exemple un peroxyde.

L'invention permet également de maintenir ou de diminuer le niveau de viscosité de la composition d'élastomère de silicone liquide, de manière à ce que cette dernière demeure parfaitement compatible avec les techniques d'injection-moulage, et notamment les procédés de moulage par injection basse pression.

L'invention autorise en outre la préservation des propriétés mécaniques et électriques du matériau silicone.

Enfin, l'invention n'engendre aucun surcoût par rapport aux solutions de l'état de la technique, puisque sa mise en oeuvre ne nécessite l'utilisation que de deux composés supplémentaires relativement peu onéreux.

Selon une particularité de l'invention, la composition peut en outre comprendre un catalyseur qui soit spécifique de la réaction de réticulation du polymère organique insaturé avec son agent réticulant spécifique.

De manière particulièrement avantageuse, le polymère organique insaturé comporte au moins deux liaisons insaturées de type pendantes, que ces dernières soient positionnées le long de la chaîne et/ou en position terminale. Ce type d'insaturation permet en effet de maximiser le niveau de fonctionnalité du polymère, par rapport à une macromolécule équivalente mais dotée uniquement de doubles ou de triples liaisons en milieu de chaîne principale.

De préférence, le polymère organique insaturé comporte au moins un groupement vinyle. Ainsi que cela a déjà été précisé auparavant, il est entendu que chaque double liaison vinyle peut être indifféremment pendante le long de la chaîne, ou pendante en position terminale.

Selon une autre particularité de l'invention, le polymère organique insaturé présente une viscosité comprise entre 0,5 et 1000 Pa.s. Cela signifie en d'autres termes que le polymère, qui est destiné à renforcer la résistance au déchirement du matériau silicone après réticulation de la composition, se présente avantageusement sous forme liquide à l'état normal.

Il s'avère en effet indispensable que la composition finale ne soit pas excessivement visqueuse afin qu'elle puisse être mise en oeuvre au moyen des techniques traditionnelles, et plus particulièrement en utilisant des procédés de moulage par injection à basse pression.

On cherche à travailler avec des polymères organiques insaturés liquides, afin également de rester dans un système de consistance similaire au système silicone de base, dont la viscosité varie généralement entre 50 et 1000 Pa.s. Dans tous les cas, on préférera travailler avec des polymères organiques insaturés ayant des viscosités proches, voire inférieures à celle du système silicone. Un polymère de renforcement plus fluide que le système LSR de base permet en effet avantageusement d'ajuster, et plus précisément d'abaisser la viscosité globale de la composition.

De préférence, le polymère organique insaturé est de type élastomère. Cette caractéristique a pour but de rester dans un système tout élastomère, puisque le silicone en est déjà un. Il est entendu qu'il peut s'agir indifféremment d'un élastomère naturel ou d'un élastomère synthétique.

Selon une autre particularité de l'invention, la composition d'élastomère de silicone liquide comporte entre 1 et 10 pcr de polymère organique insaturé, et de préférence entre 1 et 3 pcr. Il est à noter que les quantités sont ici classiquement exprimées en pcr, c'est-à-dire en parties en poids pour cent parties de résine.

Quoi qu'il en soit, on observe que le polymère de renforcement n'est présent qu'en très faible quantité au sein du mélange. Cela constitue un avantage significatif en terme de coût, mais cela facilite aussi grandement le processus de fabrication de la composition.

Conformément à une autre caractéristique avantageuse de l'invention, le polyorganosiloxane insaturé est doté d'au moins deux liaisons insaturées de type pendantes, que ces dernières soient positionnées le long de la chaîne et/ou en position terminale. Il est à noter que la problématique, les conséquences et les avantages d'un tel choix préférentiel, sont ici analogues à ce qui a déjà été mentionné dans le cadre de la description des caractéristiques du polymère de renforcement.

Il en est de même en ce qui concerne le fait que de manière particulièrement avantageuse, le polyorganosiloxane insaturé est pourvu d'au moins un groupement vinyle.

Selon une autre particularité de l'invention, la composition d'élastomère de silicone liquide comporte en outre un inhibiteur du catalyseur d'hydrosilylation. La présence de ce composé est destinée à permettre un contrôle de la réaction d'hydrosilylation, en l'occurrence en assurant l'inhibition du catalyseur jusqu'à une température donnée qui correspond à la température de décomplexation de l'inhibiteur, puis en libérant les effets dudit catalyseur une fois cette température seuil dépassée.

De préférence, le catalyseur d'hydrosilylation est un catalyseur au platine. Mais bien entendu, tout autre composé à même d'initier et/ou de favoriser la réaction d'hydrosilylation peut être utilisé de manière équivalente, sans pour autant qu'il s'agisse nécessairement d'un complexe de métal.

Selon une autre particularité de l'invention, la composition d'élastomère de silicone liquide comporte en outre au moins un additif choisi parmi le groupe des charges de renforcement, des charges conductrices, des charges ignifugeantes, des plastifiants, des stabilisants thermiques, des anti-oxydants, des colorants et des anti-UV.

Le terme additif désigne ici très généralement tout composé ajouté à la composition d'élastomère de silicone liquide. Cela concerne donc aussi bien les adjuvants qui sont incorporés à faible doses et qui n'influencent pas en principe les propriétés finales du matériau, que les charges qui sont quant à elles intégrées à doses beaucoup plus fortes et qui peuvent à priori modifier les caractéristiques finales dudit matériau.

Dans cette logique, il est à noter que les stabilisants thermiques, les anti-oxydants, les colorants et les anti-UV sont généralement considérés comme des adjuvants, tandis que les charges de renforcement, les charges conductrices, les charges ignifugeantes et les plastifiants font communément parties des charges.

A titre indicatif, on peut citer quelques exemples de charges qui peuvent être ajoutées au mélange de polymères. On pense notamment à des charges de renforcement telles que des fibres de verre ou des fibres de carbone, des pigments tels que du dioxyde de titane ou de l'oxyde de fer, des charges conductrices telles que du noir de carbone, des charges métalliques finement divisées ou de l'oxyde de zinc, des charges ignifugeantes telles que des hydrocarbures halogénés, de l'alumine trihydratée ou de l'hydroxyde de magnésium, des plastifiants pour le silicone tels que des huiles polydiméthylsiloxanes, etc.

De manière particulièrement avantageuse, la composition d'élastomère de silicone liquide comporte entre 0,5 et 50% en masse d'additifs, et de préférence entre 0,5 et 20% en masse.

L'invention concerne en outre tout accessoire d'énergie comportant au moins un élément réalisé à partir d'une composition telle que précédemment décrite. On précise que l'on entend par accessoire d'énergie, tout dispositif destiné à équiper un câble d'énergie, comme par exemple un élément de terminaison ou un élément de jonction.

Mais bien évidemment, la composition d'élastomère de silicone liquide conforme à l'invention peut aussi être utilisée plus généralement pour la fabrication de toute pièce moulée en silicone requérant une résistance au déchirement élevée.

L'invention est enfin relative à des procédés de fabrication permettant de préparer toute composition d'élastomère de silicone liquide telle que précédemment décrite.

Selon un premier procédé actuellement préféré de l'invention, la composition d'élastomère de silicone liquide est préparée par mélange de deux composants comportant respectivement au moins l'hydrogénopolyorganosiloxane et au moins le catalyseur d'hydrosilylation, et le polymère organique insaturé et son agent réticulant spécifique sont ajoutés postérieurement au mélange desdits composants.

Il est important que l'hydrogénopolyorganosiloxane et le catalyseur d'hydrosilylation ne soient pas présents dans le même composant, afin de ne pas déclencher inopinément de réaction d'hydrosilylation. Le polyorganosiloxane insaturé et la silice peuvent quant à eux être incorporés dans l'un et/ou l'autre des composants du mélange.

Dans la pratique, l'étape d'incorporation au mélange des deux composants, du polymère de renforcement et de son agent réticulant spécifique, est avantageusement réalisée juste avant l'introduction de l'ensemble de la composition dans le moule.

Conformément à un second procédé de fabrication, la composition d'élastomère de silicone liquide est toujours préparée par mélange de deux composants comportant respectivement au moins l'hydrogénopolyorganosiloxane et au moins le catalyseur d'hydrosilylation, et le polymère organique insaturé et son agent réticulant spécifique sont respectivement intégrés à l'un au moins des deux composants, préalablement au mélange desdits composants.

Comme dans le premier mode de réalisation, l'hydrogénopolyorganosiloxane et le catalyseur d'hydrosilylation ne doivent pas être présents dans le même composant, tandis que le polyorganosiloxane insaturé et la silice peuvent être incorporés dans l'un et/ou l'autre des composants du mélange.

Il s'agit ici d'un mode opératoire beaucoup plus traditionnel, en ce sens que l'ajout du polymère de renforcement et de son agent réticulant spécifique s'effectue en amont de l'étape finale de mélange. Cette dernière s'effectue donc classiquement entre deux composants, la particularité provenant du fait qu'au moins l'un desdits composants ait vu sa composition préalablement complétée par le polymère de renforcement et/ou par l'agent réticulant spécifique qui lui est associé.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est une vue en coupe longitudinale d'un élément de jonction haute tension pour des câbles d'énergie.
La figure 2 représente des courbes de résistances au déchirement.
Pour des raisons de clarté, seuls les éléments essentiels pour la compréhension de l'invention ont été représentés, et ceci sans respect de l'échelle et de manière schématique.

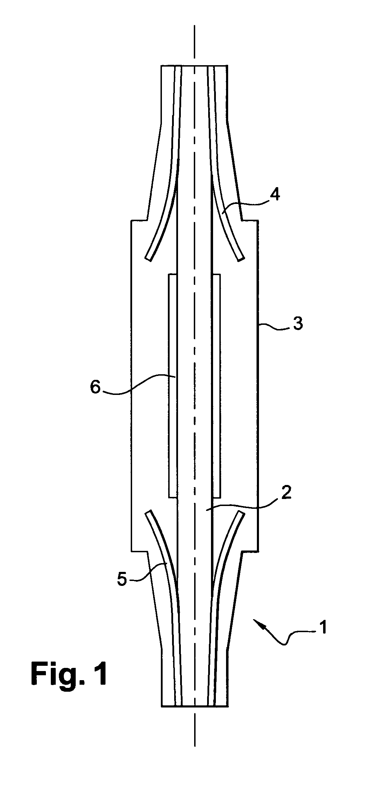

La figure 1 illustre un élément de jonction 1 qui est destiné au raccordement d'un câble haute tension 2. Cet élément de jonction 1 est classiquement composé d'un corps de jonction 3 renfermant deux cônes déflecteurs semi-conducteurs 4, 5 d'une part, et une électrode centrale semiconductrice 6 d'autre part.

Le corps de jonction 3 est fabriqué dans un matériau isolant issu de l'hydrosilylation d'une composition d'élastomère de silicone liquide conforme à l'invention. Les cônes semi-conducteurs 4, 5 ainsi que l'électrode centrale 6 sont quant eux réalisés à partir d'un matériau identique à celui du corps de jonction 3, à la différence près qu'il est chargé en noir de carbone afin de pouvoir disposer de propriétés semi-conductrices.

D'autres caractéristiques et avantages de la présente invention apparaîtront au cours de la description d'exemples qui va suivre ; lesdits exemples étant donnés à titre illustratif et nullement limitatif.

Les exemples I à III concernent des matériaux silicones qui sont destinés à être utilisés pour réaliser des composants d'accessoires d'énergie. Les compositions dont ils sont issus, sont toutes à base du même système LSR, à savoir une formulation commercialisée sous la référence LSR 8540 par la société Rhodia.

Le tableau 1 regroupe les caractéristiques principales des polymères de renforcement ajoutés au système LSR de base pour constituer les échantillons 1 à 6 des exemples I à III. Apparaissent ainsi la masse molaire et la viscosité de différents polybutadiènes liquides commercialisés sous la marque Ricon par la société Cray Valley.

**Tableau 1**

| Matériau | Mn *1000 | Viscosité |
|---|---|---|
| | (g.mol-1) | (Pa.s) |
| Ricon 131 | 4,5 | 2,75 |
| Ricon 153 | 4,7 | 60 |
| Ricon 130MA8 | 2,7 | 6,5 |
| Ricon 130MA13 | 2,9 | 17 |

Les différents échantillons sont tous réalisés en suivant le même mode préparatoire. Dans une capsule de mélange, on place les composants A et B du système LSR selon un ratio 50:50 en masse. On ajoute ensuite la quantité voulue de polymère de renforcement (Ricon). Le mélange est alors effectué dans une mélangeur en trois étapes entre lesquelles on procède à un raclage des bords de la capsule à l'aide d'une spatule. Concrètement, on réalise successivement un premier mélange pendant 30s à 1500 tr/mn, un second mélange de 30s à 1500 tr/mn, et enfin un troisième mélange de 30s à 2000 tr/mn ; un dégazage de 3 min étant effectué à l'issue de ce dernier. Le mélange ainsi réalisé est ensuite coulé dans un moule métallique de dimensions 2X13X14 en mm, puis il est placé sous une presse à la température désirée et pendant le temps choisi pour obtenir une plaque réticulée. Des éprouvettes sont alors découpées à partir de cette plaque conformément aux conditions fixées par la norme ISO 34/1.

### Exemple I

Il concerne plus particulièrement des matériaux obtenus à partir de compositions d'élastomères de silicone liquide qui ont été réticulées pendant 1h à 120°C. Deux échantillons 1 et 2 issus de compositions conformes à l'invention, mais de constitutions différentes, ont été préparés afin d'être comparés à un échantillon de référence 1 dépourvu de tout polymère de renforcement.

La première partie du tableau 2 détaille les proportions respectives des divers constituants présents dans les différentes compositions. La seconde partie du tableau 2 regroupe quant à elle les résultats des mesures de résistance au déchirement menées conformément aux prescriptions de la norme ISO 34-1. Il est à noter à cet égard que les tenues au déchirement ont été mesurées sur des éprouvettes pantalon en utilisant une vitesse de traction de 100mm/min et que les valeurs exprimées sont les valeurs médianes.

**Tableau 2**

| | Réf.1 | Ech.1 | Ech.2 |
|---|---|---|---|
| LSR (pcr) | 100 | 100 | 100 |
| Ricon 131 (pcr) | 0 | 1 | 0 |
| Ricon 130MA13 (pcr) | 0 | 0 | 1 |
| Résistance au déchirement (N/mm) | 4,5 | 7,8 | 7 |

On observe avant tout que la résistance au déchirement d'un matériau issu d'une composition d'élastomère de silicone liquide est significativement supérieure à celle d'un matériau réalisé à partir d'une composition dépourvue de polymère de renforcement, et ceci quel que soit la nature dudit polymère de renforcement présent.

### Exemple II

Il concerne plus particulièrement des matériaux dont les compositions ont été réticulées pendant 1h20 à 140°C. Un seul échantillon 3 issu d'une composition conforme à l'invention a ici été préparé en vu d'effectuer une comparaison avec un échantillon de référence 2 dépourvu de tout polymère de renforcement.

Comme dans l'exemple I, la première partie du tableau 3 détaille les proportions respectives des divers constituants présents dans les différentes compositions, tandis que la seconde partie regroupe les résultats des mesures de résistance au déchirement menées conformément toujours aux prescriptions de la norme ISO 34-1.

**Tableau 3**

| | Réf.2 | Ech.3 |
|---|---|---|
| LSR (pcr) | 100 | 100 |
| Ricon 131 (pcr) | 0 | 2 |
| Résistance au déchirement (N/mm) | 5,8 | 9,5 |

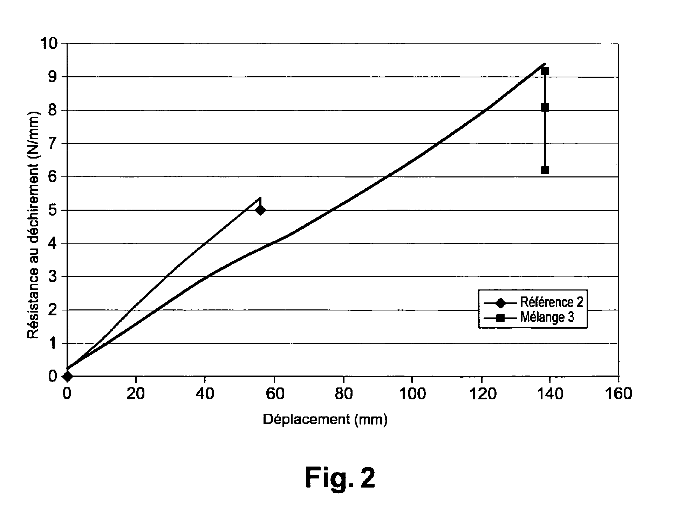

On observe là encore qu'un matériau issu d'une composition conforme à l'invention présente une résistance au déchirement très nettement supérieure à celle d'un matériau réalisé à partir d'une composition dépourvue de tout polymère de renforcement (figure 2).

Par rapport aux mesures relevées dans le cadre de l'exemple I, on remarque également que le fait de réaliser la réticulation pendant un temps plus important et à une température plus élevée permet une amélioration sensible de la tenue au déchirement du matériau silicone.

### Exemple III

Il concerne plus particulièrement des matériaux qui ont été réalisés en réticulant les compositions d'élastomères de silicone liquide pendant 1h à 120°C, puis en procédant à un recuit de 8h à 150°C. Trois échantillons 4 à 6 issus de compositions conformes à l'invention, mais de constitutions différentes, ont été préparés dans l'optique d'être comparés à un échantillon de référence 3 dépourvu de tout polymère de renforcement.

Les remarques concernant la structure du tableau 4 sont identiques à celles formulées à propos des tableaux 2 et 3.

**Tableau 4**

| | Réf.3 | Ech.4 | Ech.5 | Ech.6 |
|---|---|---|---|---|
| LSR (pcr) | 100 | 100 | 100 | 100 |
| Ricon 130MA8 (pcr) | 0 | 3 | 0 | 0 |
| Ricon 130MA13 (pcr) | 0 | 0 | 3 | 0 |
| Ricon 153 (pcr) | 0 | 0 | 0 | 1 |
| Résistance au déchirement (N/mm) | 4,5 | 7,6 | 7,4 | 7,6 |

Une nouvelle fois, on note la supériorité des matériaux issus de compositions conformes à l'invention, en terme de résistance au déchirement.

Mais on observe aussi que de telles performances peuvent être obtenues en utilisant une quantité minimale de polymère de renforcement, en sélectionnant judicieusement la nature dudit polymère de renforcement.

## Revendications

1. Composition d'élastomère de silicone liquide comportant un polyorganosiloxane insaturé pourvu d'au moins deux insaturations, un hydrogénopolyorganosiloxane doté d'au moins deux liaisons silicium-hydrogène, un catalyseur d'hydrosilylation et de la silice, **caractérisée en ce qu'**elle comporte en outre un polymère organique insaturé pourvu d'au moins deux insaturations, ainsi qu'un agent réticulant spécifique dudit polymère organique insaturé.

2. Composition selon la revendication 1, **caractérisée en ce qu'**elle comporte en outre un catalyseur spécifique de la réaction de réticulation du polymère organique insaturé avec son agent réticulant spécifique.

3. Composition selon l'une des revendications 1 ou 2, **caractérisée en ce que** le polymère organique insaturé comporte au moins deux liaisons insaturées de type pendantes.

4. Composition selon l'une des revendications 1 à 3, **caractérisée en ce que** le polymère organique insaturé comporte au moins un groupement vinyle.

5. Composition selon l'une quelconque des revendications 1 à 4, **caractérisée en ce que** le polymère organique insaturé présente une viscosité comprise entre 0,5 et 1000 Pa.s.

6. Composition selon l'une quelconque des revendications 1 à 5, **caractérisée en ce que** le polymère organique insaturé est de type élastomère.

7. Composition selon l'une quelconque des revendications 1 à 6, **caractérisée en ce qu'**elle comporte entre 1 et 10 parties en poids de polymère organique insaturé pour cent parties de résine.

8. Composition selon l'une quelconque des revendications 1 à 7, **caractérisée en ce que** le polyorganosiloxane insaturé comporte au moins deux liaisons insaturées de type pendantes.

9. Composition selon l'une quelconque des revendications 1 à 8, **caractérisée en ce que** le polyorganosiloxane insaturé comporte au moins un groupement vinyle.

10. Composition selon l'une quelconque des revendications 1 à 9, **caractérisée en ce qu'**elle comporte en outre un inhibiteur du catalyseur d'hydrosilylation.

11. Composition selon l'une quelconque des revendications 1 à 10, **caractérisée en ce que** le catalyseur d'hydrosilylation est un catalyseur au platine.

12. Composition selon l'une quelconque des revendications 1 à 11, **caractérisée en ce qu'**elle comporte en outre au moins un additif choisi parmi le groupe des charges de renforcement, des charges conductrices, des charges ignifugeantes, des plastifiants, des stabilisants thermiques, des anti-oxydants, des colorants et des anti-UV.

13. Composition selon la revendication 12, **caractérisée en ce qu'**elle comporte entre 0,5 et 50% en masse d'additifs, et de préférence entre 0,5 et 20% en masse.

14. Utilisation des compositions selon l'une quelconque des revendications 1 à 13 pour réaliser au moins un élément d'un accessoire d'énergie notamment pour câbles d'énergie et/ou de télécommunication.

15. Procédé de fabrication d'une composition d'élastomère de silicone liquide conforme à l'une quelconque des revendications 1 à 13, **caractérisé en ce que** ladite composition est préparée par mélange de deux composants comportant respectivement au moins l'hydrogénopolyorganosiloxane et au moins le catalyseur d'hydrosilylation, et **en ce que** le polymère organique insaturé et son agent réticulant spécifique sont ajoutés postérieurement au mélange desdits composants.

16. Procédé de fabrication d'une composition d'élastomère de silicone liquide conforme à l'une quelconque des revendications 1 à 13, **caractérisé en ce que** ladite composition est préparée par mélange de deux composants comportant respectivement au moins l'hydrogénopolyorganosiloxane et au moins le catalyseur d'hydrosilylation, **en ce que** le polymère organique insaturé et l'agent réticulant spécifique sont respectivement intégrés à l'un au moins des deux composants, préalablement au mélange desdits composants.

17. Composition selon la revendication 7, **caractérisée en ce qu'**elle comporte entre 1 et 3 parties en poids de polymère organique insaturé pour cent parties de résine.

## Claims

1. A liquid silicon elastomer composition including an unsaturated polyorganosiloxane provided with at least two unsaturations, a hydrogen-polyorganosiloxane provided with at least two silicon-hydrogen bonds, a hydrosilylation catalyst and silica, **characterized in that** it further includes an unsaturated organic polymer provided with at least two unsaturations, as well as a cross-linking agent specific for said unsaturated organic polymer.

2. The composition according to claim 1, **characterized in that** it further includes a catalyst specific for the cross-linking reaction of the unsaturated organic polymer with its specific cross-linking agent.

3. The composition according to any of claims 1 or 2, **characterized in that** the unsaturated organic polymer includes at least two unsaturated bonds of the pendent type.

4. The composition according to any of claims 1 to 3, **characterized in that** the unsaturated organic polymer includes at least one vinyl group.

5. The composition according to any of claims 1 to 4, **characterized in that** the unsaturated organic polymer has a viscosity between 0.5 and 1,000 Pa.s.

6. The composition according to any of claims 1 to 5, **characterized in that** the unsaturated organic polymer is of the elastomeric type.

7. The composition according to any of claims 1 to 6, **characterized in that** it includes between 1 and 10 parts by weight of unsaturated organic polymer for a hundred parts of resin.

8. The composition according to any of claims 1 to 7, **characterized in that** the unsaturated polyorganosiloxane includes at least two unsaturated bonds of the pendent type.

9. The composition according to any of claims 1 to 8, **characterized in that** the unsaturated polyorganosiloxane includes at least one vinyl group.

10. The composition according to any of claims 1 to 9, **characterized in that** it further includes an inhibitor of the hydrosilylation catalyst.

11. The composition according to any of claims 1 to 10, **characterized in that** the hydrosilylation catalyst is a platinum catalyst.

12. The composition according to any of claims 1 to 11, **characterized in that** it further includes at least one additive selected from the group of reinforcing fillers, conductive fillers, flame-retardant fillers, plasticizers, thermal stabilizers, antioxidants, dyes and anti-UV agents.

13. The composition according to claim 12, **characterized in that** it includes between 0.5 and 50% by mass of additives, and preferably between 0.5 and 20% by mass.

14. The use of compositions according to any of claims 1 to 13, for producing at least one component of a power accessory notably for power and/or telecommunications cables.

15. A method for making a liquid silicon elastomer composition according to any of claims 1 to 13, **characterized in that** said composition is prepared by mixing two components including at least the hydrogen-polyorganosiloxane and at least the hydrosilylation catalyst, respectively, and **in that** the unsaturated organic polymer and its specific cross-linking agent are added to the mixture of said components a posteriori.

16. A method for making a liquid silicon elastomer composition according to any of claims 1 to 13, **characterized in that** said composition is prepared by mixing two components including at least the hydrogen-polyorganosiloxane and at least the hydrosilylation catalyst, respectively, **in that** the unsaturated organic polymer and the specific cross-linking agent are respectively integrated into at least one of both components, prior to mixing said components.

17. The composition according to claim 7, **characterized in that** it includes between 1 and 3 parts by weight of unsaturated organic polymer for a hundred parts of resin.

## Patentansprüche

1. Zusammensetzung eines Flüssig-Silikonelastomers, ein ungesättigtes Polyorganosiloxan mit mindestens zwei Ungesättigtheiten, ein Hydrogen-Polyorganosiloxan mit mindestens zwei Silizium-Hydrogen-Bindungen, einen Hydrosilylations-Katalysator und Silica umfassend, **dadurch gekennzeichnet, dass** sie weiterhin ein ungesättigtes organisches Polymer mit mindestens zwei Ungesättigtheiten sowie ein spezielles Vernetzungsmittel des besagten ungesättigten organischen Polymers umfasst.

2. Zusammensetzung nach Anspruch 1, **dadurch gekennzeichnet, dass** sie weiterhin einen speziellen Katalysator für die Vernetzungsreaktion des ungesättigten organischen Polymers mit seinem speziellen Vernetzungsmittel umfasst.

3. Zusammensetzung nach einem der Ansprüche 1 oder 2, **dadurch gekennzeichnet, dass** das ungesättigte organische Polymer mindestens zwei ungesättigte Bindungen vom Dangling-Bond-Typ umfasst.

4. Zusammensetzung nach einem der Ansprüche 1 bis 3, **dadurch gekennzeichnet, dass** das ungesättigte organische Polymer mindestens eine Vinylgruppe umfasst.

5. Zusammensetzung nach einem der Ansprüche 1 bis 4, **dadurch gekennzeichnet, dass** das ungesättigte organische Polymer eine Viskosität von 0,5 bis 1000 Pa.s. aufweist.

6. Zusammensetzung nach einem der Ansprüche 1 bis 5, **dadurch gekennzeichnet, dass** das ungesättigte organische Polymer vom Elastomertyp ist.

7. Zusammensetzung nach einem der Ansprüche 1 bis 6, **dadurch gekennzeichnet, dass** sie von 1 bis 10 Gewichtsteile ungesättigtes organisches Polymer für einhundert Teile Harz umfasst.

8. Zusammensetzung nach einem der Ansprüche 1 bis 7, **dadurch gekennzeichnet, dass** das ungesättigte Polyorganosiloxan mindestens zwei ungesättigte Bindungen vom Dangling-Bond-Typ umfasst.

9. Zusammensetzung nach einem der Ansprüche 1 bis 8, **dadurch gekennzeichnet, dass** das ungesättigte Polyoranosiloxan mindestens eine Vinylgruppe umfasst.

10. Zusammensetzung nach einem der Ansprüche 1 bis 9, **dadurch gekennzeichnet, dass** sie weiterhin einen Inhibitor des Hydrosilylations-Katalysators umfasst.

11. Zusammensetzung nach einem der Ansprüche 1 bis 10, **dadurch gekennzeichnet, dass** der Hydrosilylations-Katalysator ein Platin-Katalysator ist.

12. Zusammensetzung nach einem der Ansprüche 1 bis 11, **dadurch gekennzeichnet, dass** sie weiterhin mindestens ein Additiv umfasst, ausgewählt aus der Gruppe der Füllstoffverstärker, der leitfähigen Füllstoffe, der feuerfesten Füllstoffe, der Weichmacher, der thermischen Stabilisatoren, der Antioxidationsmittel, der Farbstoffe und der Anti-UV-Mittel.

13. Zusammensetzung nach Anspruch 12, **dadurch gekennzeichnet, dass** sie von 0,5 bis 50 % Additivmasse und vorzugsweise 0,5 bis 20 % Masse umfasst.

14. Verwendung der Zusammensetzungen nach einem der Ansprüche 1 bis 13 zur Herstellung mindestens eines Elements eines Energiezubehörs vor allem für Strom- und/oder Telekommunikationskabel.

15. Verfahren zur Herstellung einer Zusammensetzung eines Flüssig-Silikonelastomers gemäß einem der Ansprüche 1 bis 13, **dadurch gekennzeichnet, dass** die besagte Zusammensetzung durch Mischen von zwei Komponenten vorbereitet wird, die jeweils mindestens das Hydrogen-Polyorganosiloxan und mindestens den Hydrosilylations-Katalysator umfassen, und **dadurch**, dass das ungesättigte organische Polymer und sein spezielles Vernetzungsmittel der Mischung der besagten Komponenten später hinzugefügt werden.

16. Verfahren zur Herstellung einer Zusammensetzung eines Flüssig-Silikonelastomers gemäß einem der Ansprüche 1 bis 13, **dadurch gekennzeichnet, dass** die besagte Zusammensetzung durch Mischen von zwei Komponenten vorbereitet wird, die jeweils mindestens das Hydrogen-Polyorganosiloxan und mindestens den Hydrosilylations-Katalysator umfassen, und **dadurch**, dass das ungesättigte organische Polymer und das spezielle Vernetzungsmittel jeweils mindestens in eine der zwei Komponenten vor dem Mischen der besagten Komponenten integriert werden.

17. Zusammensetzung nach Anspruch 7, **dadurch gekennzeichnet, dass** sie von 1 bis 3 Gewichtsteile ungesättigtes organisches Polymer für einhundert Teile Harz umfasst.
